# EUROPÄISCHE PATENTSCHRIFT

(11) **EP 3 663 008 B1**
(45) Veröffentlichungstag und Bekanntmachung des Hinweises auf die Patenterteilung: **25.10.2023**
(21) Anmeldenummer: 18210827.4
(22) Anmeldetag: 06.12.2018
(51) Int. Cl.: B06B 1/02, B06B 1/00, B23K 20/10, B06B 3/00, B29C 65/08, B29C 65/00

(54) **ULTRASCHALLSCHWINGER, ULTRASCHALLSCHWINGSYSTEM UND VERFAHREN ZUM BETREIBEN EINES ULTRASCHALLSCHWINGERS**
ULTRASONIC OSCILLATOR, ULTRASONIC OSCILLATION SYSTEM AND METHOD FOR OPERATING THE SAME
GÉNÉRATEUR D'ULTRASONS, SYSTÈME DE GÉNÉRATEUR D'ULTRASONS ET PROCÉDÉ DE FONCTIONNEMENT D'UN GÉNÉRATEUR D'ULTRASONS

(43) Veröffentlichungstag der Anmeldung: 10.06.2020
(73) Patentinhaber: Telsonic Holding AG, 9552 Bronschhofen (CH)
(72) Erfinder: Solenthaler, Peter, 9543 St. Margarethen (CH)
(74) Vertreter: Hepp Wenger Ryffel AG

(56) Entgegenhaltungen:
- WO-A1-2007/042235
- WO-A2-2013/117509
- DE-A1-102013 215 106
- GB-A- 1 071 616
- US-A- 3 939 033

## Beschreibung

Die vorliegende Erfindung befasst sich mit Ultraschallschwingern, wie beispielsweise Sonotroden oder Ultraschallboostern, mit Ultraschallschwingsystemen mit einem Ultraschallschwinger sowie mit Verfahren zum Betreiben eines Ultraschallschwingers. Ultraschallsonotroden werden für eine Vielzahl von Anwendungen verwendet, beispielweise zum Metall- oder Kunststoffschweissen oder zum Versiegeln von Verpackungen. Derartige Sonotroden sind beispielsweise in den Dokumenten DE102013215106 A1, US 4,651,043 und WO 2007/042235 A1 offenbart. Sie enthalten einen Einkoppelbereich, der mindestens eine Einkoppelfläche zum Einkoppeln von Ultraschallschwingungen aufweist. Die Ultraschallschwingungen werden von einem Ultraschallkonverter direkt oder indirekt über einen Ultraschallbooster eingekoppelt. Weiterhin verfügen diese Sonotroden über eine Auskoppelfläche zum Abgeben der Ultraschallschwingungen, insbesondere eine Arbeitsfläche, die beispielsweise zum Schweissen verwendet werden kann.

Bei vielen Sonotroden (beispielsweise bei den in WO 2007/042235 A1 offenbarten Linearsonotroden, die entlang einer Längsrichtung zu linearen Ultraschallschwingungen angeregt werden und deren Arbeitsfläche parallel zu dieser Längsrichtung ausgerichtet ist) tritt beim Betrieb häufig das Problem von Biegeschwingungen auf, die durch den Kontakt der Arbeitsfläche mit dem bearbeiteten Werkstück hervorgerufen werden können. Diese Schwingungen werden bei den aus dem Stand der Technik bekannten Sonotroden auf den Ultraschallkonverter übertragen, was zu dessen Beeinträchtigung oder im schlimmsten Fall sogar zu dessen Zerstörung führen kann.

Es ist daher eine Aufgabe der vorliegenden Erfindung, die Nachteile der aus dem Stand der Technik bekannten Sonotroden und anderen Ultraschallschwinger zu überwinden. Insbesondere sollen Ultraschallschwinger, wie beispielsweise Sonotroden oder auch Ultraschallbooster, bereitgestellt werden, die eine Übertragung von Biegeschwingungen auf einen Ultraschallkonverter möglichst verhindern können.

Diese Aufgabe wird in einem ersten Aspekt der Erfindung gelöst durch einen Ultraschallschwinger nach Anspruch 1, bei dem es sich beispielsweise um eine Sonotrode oder einen Ultraschallbooster handeln kann. Der Ultraschallschwinger verfügt über einen Einkoppelbereich, der mindestens eine Einkoppelfläche zum Einkoppeln von Ultraschallschwingungen in den Ultraschallschwinger aufweist, sowie mindestens eine Auskoppelfläche zum Abgeben der Ultraschallschwingungen. Die Ultraschallschwingungen können beispielsweise von einem Ultraschallkonverter oder einem Ultraschallbooster eingekoppelt werden. Bei der Auskoppelfläche kann es sich um eine Arbeitsfläche einer Sonotrode handeln. Der Einkoppelbereich weist eine Vertiefung mit einer die Einkoppelfläche bildenden Bodenfläche auf.

Vorteilhafterweise ist die Einkoppelfläche im Bereich eines Biegeschwingungsminimums des Ultraschallschwingers angeordnet. Als Bereich eines Biegeschwingungsminimums des Ultraschallschwingers, insbesondere einer Sonotrode, wird hier um im Folgenden ein Bereich verstanden, in dem Biegeschwingungen, die beim bestimmungsgemässen Betreiben des Ultraschallschwingers entstehen, ein zumindest lokales oder sogar globales Amplitudenminimum aufweisen. Das bestimmungsgemässe Betreiben kann beispielsweise ein Metall- oder Kunststoffschweissen eines Werkstücks mit der Arbeitsfläche einer Sonotrode sein. Ein Ultraschallbooster kann durch die Kopplung mit einer Sonotrode ebenfalls zu Biegeschwingungen angeregt werden.

Aufgrund der erfindungsgemässe Anordnung der Einkoppelfläche im Bereich eines Biegeschwingungsminimums wird nur ein geringer Anteil der Biegeschwingungen auf einen Ultraschallgeber übertragen, der die Ultraschallschwingungen in den Ultraschallschwinger einkoppelt - also beispielsweise auf einen mit einer Sonotrode direkt oder indirekt über einen Ultraschallbooster verbundenen Ultraschallkonverter. Infolgedessen wird der Ultraschallkonverter wesentlich weniger beeinträchtigt, und auch das Risiko einer Zerstörung kann weitgehend reduziert werden.

Wie sich ausserdem gezeigt hat, ist bei geeigneter Dimensionierung der Vertiefung eine gegenüber dem Stand der Technik erhöhte Übersetzung der Schwingungsamplitude möglich, also ein erhöhtes Verhältnis aus Ausgangs- zu Eingangsamplitude. Die Ankopplung erfolgt nämlich an einer Position, an der die Eigenmode der Ultraschallschwingung (beispielsweise einer Linear- oder einer Torsionalschwingung) eine geringere Amplitude hat als an der Rückseite des Ultraschallschwingers, wo die Ankopplung auf konventionelle Weise erfolgt. In einigen Anwendungen kann daher auf einen ansonsten notwendigen Ultraschallbooster verzichtet werden.

Da zudem die Einkoppelfläche nur einen Anteil des Gesamtquerschnitts des Ultraschallschwingers bildet, kann bei vorgegebenem Gesamtquerschnitt die Einkoppelfläche kleiner gewählt werden. Umgekehrt kann bei vorgegebener Grösse einer Einkoppelfläche eine Sonotrode mit grösserem Querschnitt verwendet werden. Über die Tiefe der Vertiefung ist überdies eine einfache Abstimmung der Sonotrode möglich.

Erfindungsgemäβ ist die Vertiefung vollumfänglich von einer Seitenfläche umschlossen. Der Ultraschallschwinger, beispielsweise die Sonotrode, erstreckt sich also um den vollen Umfang der Bodenfläche herum in Längsrichtung über die Bodenfläche hinaus. Hierdurch können eine erhöhte Steifigkeit und Stabilität erreicht werden, insbesondere wenn die Rückseite des Ultraschallschwingers eine Länge und eine Breite aufweist, die annähernd gleich sind - beispielsweise, wenn die Rückseite kreisförmig ist.

Wenn der Ultraschallschwinger entlang einer Längsrichtung zu Ultraschallschwingungen einer Wellenlänge λ anregbar ist, eine Länge l=kλ/2 aufweist (wobei k eine ganze Zahl und bevorzugt k=1 ist) und entlang der Längsrichtung eine Anzahl n Biegeschwingungsminima aufweist, ist es vorteilhaft, wenn die Einkoppelfläche gegenüber einer Rückseite des Ultraschallschwingers um eine Tiefe zurückversetzt ist (insbesondere entlang einer Längsachse des Ultraschallschwinger), die im Bereich kλ/(4n) ± kλ/(8n), bevorzugt kλ/(4n) ± kλ/(16n), besonders bevorzugt kλ/(4n) ± kλ/(32n) liegt. In den allermeisten Ausführungsformen befindet sich die Einkoppelfläche dann nämlich im Bereich eines Biegeschwingungsminimums des Ultraschallschwingers.

Die Frequenzen und Wellenlängen der Eigenmoden sind abhängig vom Material des Ultraschallschwingers. Typischerweise kann der Ultraschallschwinger aus Stahl bestehen, dessen Schallgeschwindigkeit für longitudinale Wellen etwa 6000 m/s beträgt. Für übliche Ultraschallfrequenzen, die im Bereich von 20 kHz bis 40 kHz, insbesondere von 24 kHz bis 36 kHz liegen, ergeben sich also typische Wellenlängen λ im Bereich von etwa 15 cm bis 30 cm, die demgemäss in der vorliegenden Erfindung bevorzugt sind. Entsprechend ergeben sich auch typische Längen der Ultraschallschwinger aus der Beziehung l=kλ/2 mit einer ganzen Zahl k.

Die Einkoppelfläche kann einen Durchmesser im Bereich von 20 mm bis 60 mm, insbesondere im Bereich von 30 mm bis 40 mm aufweisen. Der Querschnitt des Ultraschallschwingers kann im Einkoppelbereich einen Durchmesser im Bereich von 40 mm bis 100 mm, insbesondere im Bereich von 50 mm bis 70 mm aufweisen. Als Durchmesser einer nicht notwendigerweise kreisförmigen Fläche wird dabei der Durchmesser des kleinsten Kreises verstanden, der die Fläche enthält.

Das Verhältnis aus der Grösse der Einkoppelfläche und der Grösse eines Gesamtquerschnitts des Ultraschallschwingers liegt vorzugsweise im Bereich von 25 % bis 50 %, weiter bevorzugt im Bereich von 30 % bis 40 %. Wie sich gezeigt hat, ist bei einem solchen Verhältnis ein optimaler Kompromiss geschaffen zwischen einer hohen Leistungseinkopplung und einer geringen Übertragung von Biegeschwingungen.

Aus Symmetriegründen ist es in vielen Ausführungsformen vorteilhaft, wenn die Einkoppelfläche senkrecht zu einer Längsrichtung des Ultraschallschwingers verläuft. In baulich einfachen Ausführungsformen ist die Vertiefung kreiszylinderförmig ausgebildet.

Wie bereits erwähnt, kann der Ultraschallschwinger eine Sonotrode sein. Dabei kann es sich um eine Linearsonotrode handeln, die entlang ihrer Längsrichtung zu linearen Ultraschallschwingungen anregbar ist, oder um eine Torsionssonotrode, die entlang ihrer Längsrichtung zu torsionalen Ultraschallschwingungen anregbar ist. Die Auskoppelfläche, insbesondere die Arbeitsfläche der Sonotrode, kann parallel zu einer Längsrichtung des Ultraschallschwingers ausgerichtet sein. Dies ist sowohl für Linearsonotroden als auch für Torsionssonotroden vorteilhaft.

In einem weiteren Aspekt betrifft die Erfindung auch ein Ultraschallschwingsystem, welches einen wie oben beschriebenen Ultraschallschwinger enthält sowie einen Ultraschallgeber mit einer Auskoppelfläche, über die Ultraschallschwingungen vom Ultraschallgeber in die Einkoppelfläche des Ultraschallschwingers einkoppelbar sind. Hieraus ergeben sich die bereits oben erläuterten Vorteile.

Der Ultraschallgeber ist vorteilhafterweise derart mit dem Ultraschallschwinger verbunden oder verbindbar, dass ein Kontakt nur zwischen der Auskoppelfläche des Ultraschallgebers und der Einkoppelfläche des Ultraschallschwingers besteht.

Hierdurch wird verhindert, dass störende Biegeschwingungen an anderen Stellen vom Ultraschallschwinger auf den Ultraschallgeber übertragen werden. Um einen Kontakt zwischen den weiteren Flächen des Ultraschallschwingers und des Ultraschallgebers auch beim bestimmungsgemässen Betrieb zu verhindern, kann ein Abstand dieser Flächen im Ruhezustand im Bereich von 0,1 mm bis 2 mm genügen.

Den Ultraschallschwinger und den Ultraschallgeber im Sinne der Erfindung können verschiedene Komponenten des Ultraschallschwingsystems bilden.

In einer ersten Variante ist der Ultraschallschwinger eine Sonotrode und der Ultraschallgeber ein Ultraschallkonverter. In dieser Variante werden die Ultraschallschwingungen direkt vom Ultraschallkonverter auf die Sonotrode übertragen, und die Übertragung von Biegeschwingungen von der Sonotrode auf den Ultraschallkonverter werden teilweise oder sogar vollständig unterdrückt.

In einer zweiten Variante ist der Ultraschallschwinger eine Sonotrode und der Ultraschallgeber ein Ultraschallbooster. Hierdurch kann die Übertragung von Biegeschwingungen von der Sonotrode auf den Ultraschallbooster teilweise oder sogar vollständig verhindert. Der Ultraschallbooster kann seinerseits mit einem Ultraschallkonverter verbunden oder verbindbar sein, so dass auch der Ultraschallkonverter vor den Biegeschwingungen geschützt wird.

In einer dritten Variante ist der Ultraschallschwinger ein Ultraschallbooster und der Ultraschallgeber ein Ultraschallkonverter. Hier kann der Ultraschallbooster mit einer Sonotrode verbunden oder verbindbar sein. Somit ebenfalls die Übertragung von Biegeschwingungen verhindert.

Selbstverständlich ist es auch denkbar und liegt im Rahmen der Erfindung, dass sowohl ein Ultraschallbooster eine erste erfindungsgemässe Vertiefung mit einer ersten Einkoppelfläche aufweist, in die Ultraschallschwingungen von einem Ultraschallkonverter eingekoppelt werden, und eine Sonotrode eine zweite erfindungsgemässe Vertiefung mit einer zweiten erfindungsgemässen Einkoppelfläche aufweist, in die der Ultraschallbooster die Ultraschallschwingungen einkoppelt. Selbstverständlich können im Rahmen der Erfindung auf diese Weise auch mehrere Ultraschallbooster in Reihe oder parallel angeordnet werden, und/oder mehrere Konverter können direkt und parallel mit einer Sonotrode angeordnet werden.

In vielen Ausführungsformen sind der Ultraschallschwinger und der Ultraschallgeber durch zwei separate Bauteile gebildet, die miteinander verbunden oder verbindbar sind. Es liegt allerdings auch im Rahmen der Erfindung, dass der Ultraschallschwinger und der Ultraschallgeber (also beispielsweise eine Sonotrode und ein Ultraschallbooster) miteinander einstückig ausgebildet sind. In diesen ebenfalls erfindungsgemässen Ausführungsformen bilden die Einkoppelfläche des Ultraschallschwingers und die Auskoppelfläche des Ultraschallgebers eine gemeinsame, im Inneren eines einstückigen Bauteils liegende Fläche.

Die Erfindung betrifft weiterhin ein Verfahren nach Anspruch 14 zum Betreiben eines wie oben beschriebenen Ultraschallschwingers, insbesondere in einem wie oben beschriebenen Ultraschallschwingsystem. Das Verfahren enthält einen Schritt, in dem Ultraschallschwingungen in die Einkoppelfläche des Ultraschallschwingers eingekoppelt werden. Insbesondere können die Ultraschallschwingungen also von einer Auskoppelfläche eines Ultraschallkonverters in eine Einkoppelfläche eines Ultraschallboosters, von einer Auskoppelfläche eines Ultraschallkonverters in eine Einkoppelfläche einer Sonotrode oder von einer Auskoppelfläche eines Ultraschallboosters in eine Einkoppelfläche einer Sonotrode eingekoppelt werden.

Das Verfahren ist besonders dann vorteilhaft, wenn die Auskoppelfläche, insbesondere die Arbeitsfläche der Sonotrode, parallel zu einer Längsrichtung des Ultraschallschwingers ausgerichtet ist. Denn dann entstehen beim bestimmungsgemässen Betrieb aufgrund von an der Auskoppelfläche wirkenden Kräften Biegemomente und Biegeschwingungen, deren Übertragung durch die erfindungsgemässe Ausbildung des Ultraschallschallschwingers reduziert werden kann.

Im Folgenden werden die Erfindung und ihre Vorteile anhand mehrerer Ausführungsbeispiele näher erläutert. Dabei zeigen
- Figur 1:: ein erstes erfindungsgemässes Ausführungsbeispiel mit einer erfindungsgemässen Sonotrode in einer seitlichen Schnittansicht;
- Figur 2:: ein zweites erfindungsgemässes Ausführungsbeispiel mit einem erfindungsgemässen Ultraschallbooster in einer seitlichen Schnittansicht;
- Figur 3:: ein drittes erfindungsgemässes Ausführungsbeispiel mit sowohl einer erfindungsgemässen Sonotrode als auch einem erfindungsgemässen Ultraschallbooster in einer seitlichen Schnittansicht;
- Figur 4:: ein viertes erfindungsgemässes Ausführungsbeispiel mit einer erfindungsgemässen Sonotrode und einem Ultraschallbooster, die miteinander einstückig ausgebildet sind.

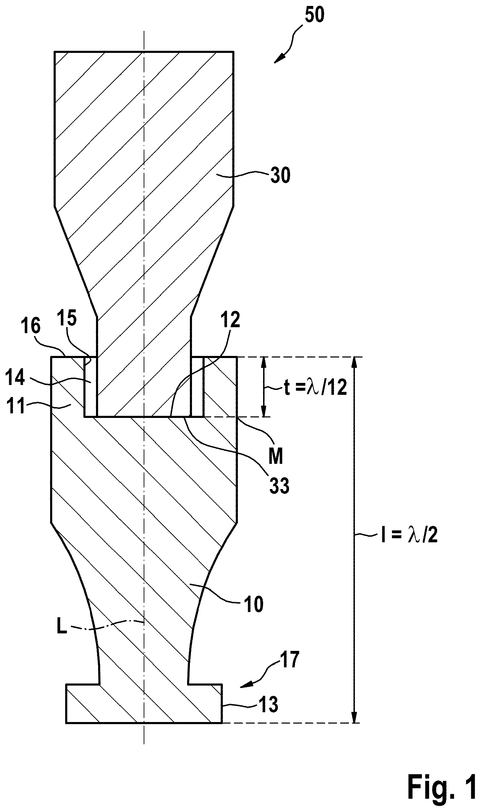

Figur 1 zeigt in einer seitlichen Schnittansicht ein erstes erfindungsgemässes Ultraschallschwingsystem 50 mit einem Ultraschallschwinger in Form einer Sonotrode 10 und einem Ultraschallgeber in Form eines Ultraschallboosters 30. An dem in Figur 1 unten dargestellten Ende enthält die Sonotrode 10 einen Arbeitsbereich 17 mit einer Arbeitsfläche 13, die parallel zu einer Längsrichtung L der Sonotrode 10 verläuft. An dem gegenüberliegenden, in Figur 1 oben dargestellten Ende weist die Sonotrode 10 einen Einkoppelbereich 11 mit einer Rückseite 16 und einer kreiszylinderförmigen Vertiefung 14 auf. Die Vertiefung 14 ist definiert durch eine kreisförmige Bodenfläche, die als Einkoppelfläche 12 für Ultraschallschwingungen dient, sowie eine Seitenfläche 15, welche die Vertiefung 14 vollumfänglich umschliesst.

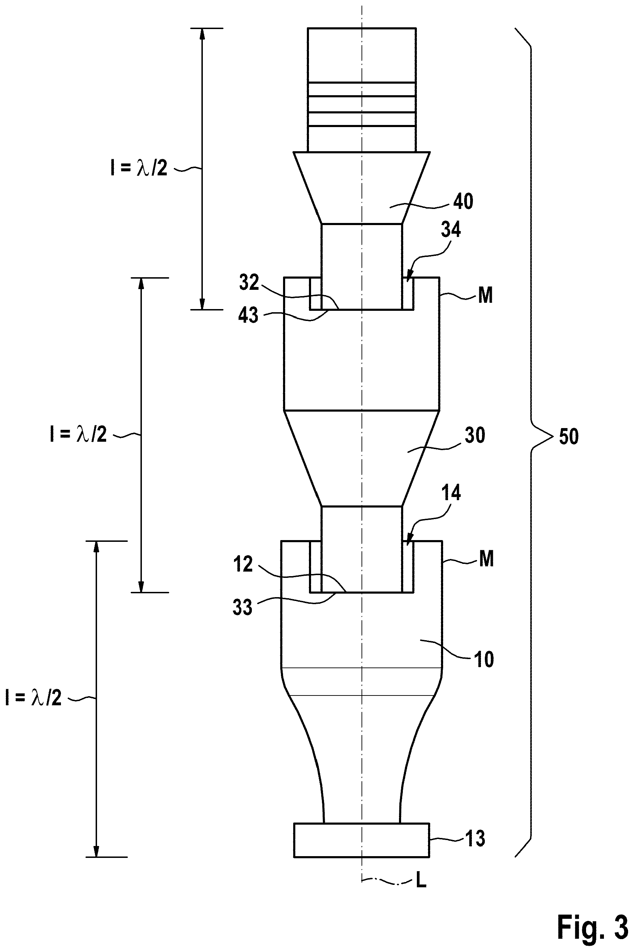

Der Ultraschallbooster 30 verfügt an seinem in Figur 1 unten dargestellten Ende über eine Auskoppelfläche 33, die in Kontakt mit der Einkoppelfläche 12 der Sonotrode 10 ist, jedoch nicht auch mit der Seitenfläche 15 der Vertiefung 14. Mit Hilfe eines in Figur 1 nicht dargestellten Ultraschallkonverters (siehe dazu Figur 3) kann der Ultraschallbooster 30 zu Ultraschallschwingungen angeregt werde, die er über seine Auskoppelfläche 33 und die Einkoppelfläche 12 der Sonotrode 10 in die Sonotrode 10 einkoppelt.

Werden die Ultraschallschwingungen in die Sonotrode 10 eingekoppelt, so wird sie entlang ihrer Längsrichtung L zu linearen Ultraschallschwingungen einer Wellenlänge λ angeregt, wobei die Sonotrode 10 eine Länge l=λ/2 aufweist. Beim Bearbeiten eines hier nicht dargestellten Werkstücks mit der Arbeitsfläche 13 entstehen in der Sonotrode 10 Biegeschwingungen. Dabei bilden sich entlang der Längsrichtung L drei Biegeschwingungsminima M, von denen in Figur 1 nur eines markiert ist. Erfindungsgemäss ist die Tiefe t der Vertiefung 14 derart gewählt, dass sich die Einkoppelfläche 12 in Bereich eines solchen Biegeschwingungsminimums M befindet. Hierzu wurde als Tiefe t=λ/12=l/6 gewählt. Auf diese Weise wird die Übertragung der Biegeschwingungen auf den Ultraschallbooster 30 und den damit verbundenen Ultraschallkonverter effektiv verhindert.

Die Auskoppelfläche 33 des Ultraschallboosters 30 kann beispielsweise einen Durchmesser von 36 mm haben und die Sonotrode 10 einen Durchmesser von 60 mm. Hieraus ergibt sich ein Verhältnis aus der Grösse der Ankoppelfläche 12 und der Grösse des Gesamtquerschnitts der Sonotrode 10 von 36 %. Die Seitenfläche 15 hat einen Durchmesser von 37 mm, so dass zwischen dem Ultraschallbooster 30 und der Seitenfläche 15 ein radialer Abstand von 0,5 mm gebildet ist.

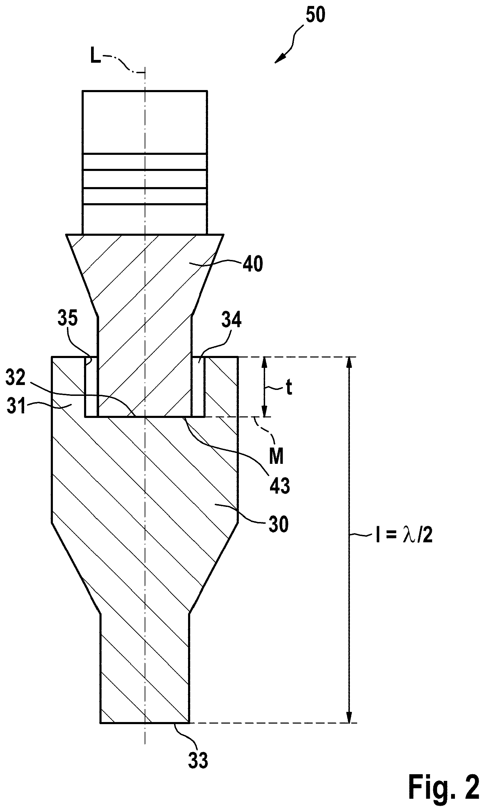

Die Figur 2 zeigt ein weiteres erfindungsgemässes Ultraschallschwingsystem 50 mit einem Ultraschallbooster 30 und einem Ultraschallkonverter 40. In diesem Ausführungsbeispiel bildet der Ultraschallbooster 30 einen erfindungsgemässen Ultraschallschwinger. In einem in Figur 2 oben dargestellten Einkoppelbereich 31 verfügt er nämlich über eine kreiszylinderförmige Vertiefung 34 mit einer eine Einkoppelfläche 32 bildenden Bodenfläche und einer Seitenfläche 35. Über eine Auskoppelfläche 43 koppelt der Ultraschallkonverter 40 Ultraschallschwingungen in den Ultraschallbooster 30 ein. An dem gegenüberliegenden, in Figur 2 unten dargestellten Ende verfügt der Ultraschallbooster 30 über eine Auskoppelfläche 33, über die er die Ultraschallschwingungen an eine Sonotrode übertragen kann, bei der es sich um eine wie in Figur 1 dargestellte erfindungsgemässe Sonotrode 10 handeln kann (siehe dazu auch Figur 3) oder um eine aus dem Stand der Technik bekannte Sonotrode.

Beim bestimmungsgemässen Bearbeiten eines Werkstücks können in der Sonotrode Biegeschwingungen entstehen, die sich in den Ultraschallbooster 30 fortpflanzen. Da sich jedoch die Einkoppelfläche 32 des Ultraschallboosters 30 im Bereich eines Biegeschwingungsminimums M befindet, werden praktisch keine Biegeschwingungen an den Ultraschallkonverter 40 übertragen.

Das in Figur 3 dargestellte erfindungsgemässe Ultraschallschwingsystem 50 enthält sowohl eine erfindungsgemässe Sonotrode 10 mit einer Vertiefung 14 als auch einen erfindungsgemässen Ultraschallbooster 30 mit einer Vertiefung 34. Beide verfügen über eine Einkoppelfläche 12 bzw. 32, die sich in einem jeweiligen Biegeschwingungsminimum M befindet, so dass eine doppelte Reduktion der Biegeschwingungen von der Arbeitsfläche 13 zum Ultraschallkonverter 40 stattfindet.

Wie sich aus Figur 3 zudem ergibt, haben die Sonotrode 10, der Ultraschallbooster 30 und der Ultraschallkonverter 40 entlang einer gemeinsamen Längsrichtung L jeweils eine Länge λ/2. Da jedoch der Ultraschallkonverter 40 teilweise in die Vertiefung 34 des Ultraschallbooster 30 eindringt und der Ultraschallbooster 30 teilweise in die Vertiefung 14 der Sonotrode 10 eindringt, hat der gesamte Aufbau eine Länge von weniger als 3λ/2. Somit lässt sich eine verringerte Gesamtbaulänge erzielen. Dies hat ausserdem einen geringeren Amplitudenverlust vom Ultraschallkonverter 40 bis hin zur Arbeitsfläche 13 zur Folge.

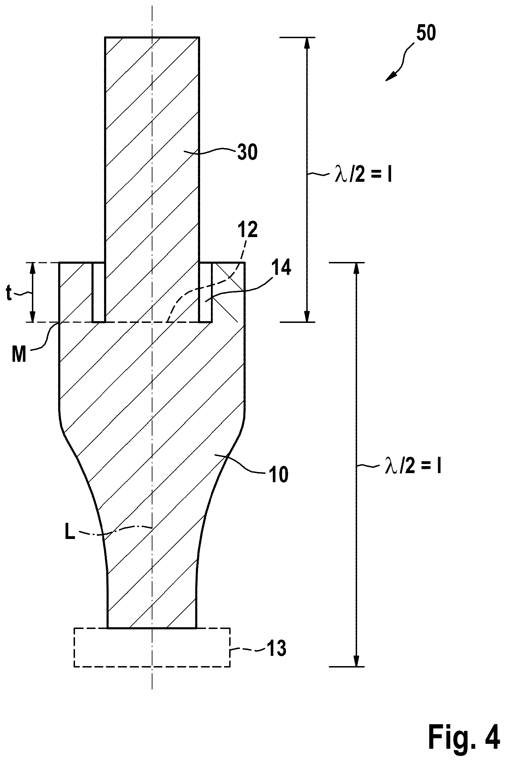

In Figur 4 ist ein weiteres erfindungsgemässes Ultraschallschwingsystem 50 dargestellt, welches gedanklich aus einer Sonotrode 10 und einem Ultraschallbooster 30 zusammengesetzt ist, die jedoch miteinander einstückig ausgebildet sind. Hier bilden eine Einkoppelfläche 12 der Sonotrode 10 und eine Auskoppelfläche 33 des Ultraschallboosters 30 eine gemeinsam, im Inneren verlaufende Fläche. Auch hier haben die beiden gedanklichen Einzelteile, nämlich die Sonotrode 10 und der Ultraschallbooster 30, jeweils eine Länge λ/2. Insgesamt hat das einstückige Bauteil jedoch eine Länge, die kleiner ist als X.

## Patentansprüche

1. Ultraschallschwinger (10; 30), insbesondere Sonotrode (10) oder Ultraschallbooster (30), mit einem Einkoppelbereich (11; 31), der mindestens eine Einkoppelfläche (12; 32) zum Einkoppeln von Ultraschallschwingungen in den Ultraschallschwinger (10; 30) aufweist, insbesondere von einem Ultraschallkonverter (40) oder einem Ultraschallbooster (30), sowie mindestens einer Auskoppelfläche (13; 33), insbesondere mindestens einer Arbeitsfläche (13) einer Sonotrode (10), zum Abgeben der Ultraschallschwingungen, wobei der Einkoppelbereich (11; 31) eine Vertiefung (14; 34) aufweist, die vollumfänglich von einer Seitenfläche (15; 35) umschlossen ist,
**dadurch gekennzeichnet, dass**
die Vertiefung (14; 34) eine die Einkoppelfläche (12; 32) bildende Bodenfläche aufweist.

2. Ultraschallschwinger (10; 30) gemäss Anspruch 1,
wobei die Einkoppelfläche (12; 32) im Bereich eines Biegeschwingungsminimums (M) des Ultraschallschwingers (10; 30) angeordnet ist.

3. Ultraschallschwinger (10; 30) gemäss einem der vorangehenden Ansprüche,
wobei der Ultraschallschwinger (10; 30)
- entlang einer Längsrichtung (L) zu Ultraschallschwingungen einer Wellenlänge (λ) anregbar ist,
- eine Länge l=kλ/2 mit einer natürlichen Zahl (k) aufweist, wobei bevorzugt k=1 ist, und
- entlang der Längsrichtung (L) eine Anzahl (n) Biegeschwingungsminima (M) aufweist,
wobei die Einkoppelfläche (12) gegenüber einer Rückseite (16) des Ultraschallschwingers (10; 30) um eine Tiefe (t) zurückversetzt ist, die im Bereich kλ/(4n) ± kλ/(8n), bevorzugt kλ/(4n) ± kλ/(16n), besonders kλ/(4n) ± kλ/(32n) liegt.

4. Ultraschallschwinger (10; 30) gemäss einem der vorangehenden Ansprüche,
wobei das Verhältnis aus der Grösse der Einkoppelfläche (12; 32) und der Grösse eines Gesamtquerschnitts des Ultraschallschwingers (10; 30) im Bereich von 25 % bis 50 %, bevorzugt im Bereich von 30 % bis 40 % liegt.

5. Ultraschallschwinger (10; 30) gemäss einem der vorangehenden Ansprüche,
wobei die Einkoppelfläche (12; 32) senkrecht zu einer Längsrichtung (L) des Ultraschallschwingers (10; 30) verläuft.

6. Ultraschallschwinger (10; 30) gemäss einem der vorangehenden Ansprüche,
wobei die Vertiefung (14; 34) kreiszylinderförmig ausgebildet ist.

7. Ultraschallschwinger (10; 30) gemäss einem der vorangehenden Ansprüche,
wobei die Auskoppelfläche (13; 33), insbesondere die Arbeitsfläche (13) der Sonotrode (10), parallel zu einer Längsrichtung (L) des Ultraschallschwingers (10; 30) ausgerichtet ist.

8. Ultraschallschwingsystem (50), enthaltend einen Ultraschallschwinger (10; 30) gemäss einem der vorangehenden Ansprüche sowie einen Ultraschallgeber (30; 40) mit einer Auskoppelfläche (33; 43), über die Ultraschallschwingungen vom Ultraschallgeber (30; 40) in die Einkoppelfläche (12; 32) des Ultraschallschwingers (10; 30) einkoppelbar sind.

9. Ultraschallschwingsystem (50) gemäss Anspruch 8,
wobei der Ultraschallgeber (30; 40) derart mit dem Ultraschallschwinger (10; 30) verbunden oder verbindbar ist, dass ein Kontakt nur zwischen der Auskoppelfläche (33; 43) des Ultraschallgebers (30; 40) und der Einkoppelfläche (12; 32) des Ultraschallschwingers (10; 30) besteht.

10. Ultraschallschwingsystem (50) gemäss einem der Ansprüche 8 und 9,
wobei der Ultraschallschwinger (10) eine Sonotrode (10) ist und der Ultraschallgeber (40) ein Ultraschallkonverter (40) ist.

11. Ultraschallschwingsystem (50) gemäss einem der Ansprüche 8 und 9,
wobei der Ultraschallschwinger (10) eine Sonotrode (10) ist und der Ultraschallgeber (30) ein Ultraschallbooster (30) ist.

12. Ultraschallschwingsystem (50) gemäss einem der Ansprüche 8 und 9,
wobei der Ultraschallschwinger (30) ein Ultraschallbooster (30) ist und der Ultraschallgeber (40) ein Ultraschallkonverter (40) ist.

13. Ultraschallschwingsystem (50) gemäss einem der Ansprüche 8 bis 12,
wobei der Ultraschallschwinger (10; 30) und der Ultraschallgeber (30; 40) miteinander einstückig ausgebildet sind.

14. Verfahren zum Betreiben eines Ultraschallschwingers (10; 30) gemäss einem der Ansprüche 1 bis 7, insbesondere in einem Ultraschallschwingsystem (50) gemäss einem der Ansprüche 8 bis 13, enthaltend einen Schritt, in dem Ultraschallschwingungen in die Einkoppelfläche (12; 32) des Ultraschallschwingers (10; 30) eingekoppelt werden, insbesondere von einem Ultraschallkonverter (40) oder einem Ultraschallbooster (30).

15. Verfahren gemäss Anspruch 14,
wobei die Auskoppelfläche (13; 33), insbesondere die Arbeitsfläche (13) der Sonotrode (10), parallel zu einer Längsrichtung (L) des Ultraschallschwingers (10; 30) ausgerichtet ist.

## Claims

1. Ultrasonic vibrator (10; 30), in particular sonotrode (10) or ultrasonic booster (30), having an input coupling region (11; 31), which has at least one input coupling surface (12; 32) for coupling ultrasonic vibrations into the ultrasonic vibrator (10; 30), in particular from an ultrasonic converter (40) or an ultrasonic booster (30), and at least one output coupling surface (13; 33), in particular at least one working surface (13) of a sonotrode (10), for outputting the ultrasonic vibrations, the input coupling region (11; 31) having a recess (14; 34) which is completely enclosed by a side surface (15; 35), **characterized in that**
the recess (14; 34) has a bottom surface which forms the input coupling surface (12; 32).

2. Ultrasonic vibrator (10; 30) according to claim 1,
wherein the input coupling surface (12; 32) is arranged in the region of a bending vibration minimum (M) of the ultrasonic vibrator (10; 30).

3. Ultrasonic vibrator (10; 30) according to either one of the preceding claims,
wherein said ultrasonic vibrator (10; 30)
- is excitable to ultrasonic vibrations of a wavelength (λ) along a longitudinal direction (L),
- has a length l=kλ/2 with a natural number (k), wherein preferably k=1, and
- has a number (n) of bending vibration minima (M) along the longitudinal direction (L),
wherein the input coupling surface (12) is set back relative to a rear side (16) of the ultrasonic vibrator (10; 30) by a depth (t) which lies in the range kλ/(4n) ± kA/(8n), preferably kλ/(4n) ± kA/(16n), particularly kλ/(4n) ± kλ/(32n).

4. Ultrasonic vibrator (10; 30) according to any one of the preceding claims,
wherein the ratio of the size of the input coupling surface (12; 32) and the size of a total cross section of the ultrasonic vibrator (10; 30) is in the range of 25% to 50%, preferably in the range of 30% to 40%.

5. Ultrasonic vibrator (10; 30) according to any one of the preceding claims,
wherein the input coupling surface (12; 32) extends perpendicularly to a longitudinal direction (L) of the ultrasonic vibrator (10; 30).

6. Ultrasonic vibrator (10; 30) according to any one of the preceding claims,
wherein the recess (14; 34) is circular cylindrical in shape.

7. Ultrasonic vibrator (10; 30) according to any one of the preceding claims,
wherein the output coupling surface (13; 33), in particular the working surface (13) of the sonotrode (10), is aligned parallel to a longitudinal direction (L) of the ultrasonic vibrator (10; 30).

8. Ultrasonic vibration system (50), comprising an ultrasonic vibrator (10; 30) according to any one of the preceding claims and an ultrasonic transmitter (30; 40) with an input coupling surface (33; 43), via which ultrasonic vibrations from the ultrasonic transmitter (30; 40) can be coupled into the input coupling surface (12; 32) of the ultrasonic vibrator (10; 30).

9. Ultrasonic vibrating system (50) according to claim 8, wherein the ultrasonic transmitter (30; 40) is connected or connectable to the ultrasonic vibrator (10; 30) in such a way that a contact exists only between the output coupling surface (33; 43) of the ultrasonic transmitter (30; 40) and the input coupling surface (12; 32) of the ultrasonic vibrator (10; 30).

10. Ultrasonic vibration system (50) according to either one of claims 8 and 9,
wherein the ultrasonic vibrator (10) is a sonotrode (10) and the ultrasonic transmitter (40) is an ultrasonic converter (40).

11. Ultrasonic vibration system (50) according to either one of claims 8 and 9,
wherein the ultrasonic vibrator (10) is a sonotrode (10) and the ultrasonic transmitter (30) is an ultrasonic booster (30).

12. Ultrasonic vibration system (50) according to either one of claims 8 and 9,
wherein the ultrasonic vibrator (30) is an ultrasonic booster (30) and the ultrasonic transmitter (40) is an ultrasonic converter (40).

13. Ultrasonic vibration system (50) according to any one of claims 8 to 12,
wherein the ultrasonic vibrator (10; 30) and the ultrasonic transmitter (30; 40) are formed integrally with one another.

14. A process for operating an ultrasonic vibrator (10; 30) according to any one of claims 1 to 7, in particular in an ultrasonic vibration system (50) according to any one of claims 8 to 13, comprising a step in which ultrasonic vibrations are coupled into the input coupling surface (12; 32) of the ultrasonic vibrator (10; 30), in particular from an ultrasonic converter (40) or an ultrasonic booster (30).

15. The process according to claim 14,
wherein the output coupling surface (13; 33), in particular the working surface (13) of the sonotrode (10), is aligned parallel to a longitudinal direction (L) of the ultrasonic vibrator (10; 30).

## Revendications

1. Vibrateur ultrasonore (10 ; 30), en particulier sonotrode (10) ou booster ultrasonore (30), avec une zone de couplage (11 ; 31) qui présente au moins une surface de couplage (12 ; 32) pour le couplage de vibrations ultrasonores dans le vibrateur ultrasonore (10 ; 30), en particulier d'un convertisseur ultrasonore (40) ou d'un booster ultrasonore (30), ainsi qu'au moins une surface de découplage (13 ; 33), en particulier au moins une surface de travail (13) d'une sonotrode (10), pour émettre les vibrations ultrasonores, la zone de couplage (11 ; 31) présentant une cavité (14 ; 34) qui est entièrement entouré par une surface latérale (15 ; 35),
**caractérisée en ce que**
la cavité (14 ; 34) présente une surface de fond formant la surface de couplage (12 ; 32).

2. Vibrateur ultrasonore (10 ; 30) selon la revendication 1, dans lequel la surface de couplage (12 ; 32) est disposée dans la zone d'un minimum de vibration de flexion (M) du vibrateur ultrasonore (10 ; 30).

3. Vibrateur ultrasonore (10 ; 30) selon l'une quelconque des revendications précédentes,
dans lequel le vibrateur ultrasonore (10 ; 30)
- peut être excité, le long d'une direction longitudinale (L), à des vibrations ultrasonores d'une longueur d'onde (X),
- a une longueur l=kλ/2 avec un nombre naturel (k), de préférence k=1, et
- a, le long de la direction longitudinale (L), un nombre (n) de minima de vibration de flexion (M),
la surface de couplage (12) étant en retrait par rapport à une surface arrière (16) du vibrateur ultrasonore (10 ; 30) d'une profondeur (t) qui se situe dans la plage kλ/(4n) ± kλ/(8n), de préférence kλ/(4n) ± kλ/(16n), en particulier kλ/(4n) ± kλ/(32n).

4. Vibrateur ultrasonore (10 ; 30) selon l'une quelconque des revendications précédentes,
dans lequel le rapport entre la taille de la surface de couplage (12 ; 32) et la taille d'une section transversale totale du vibrateur ultrasonore (10 ; 30) se situe dans la plage de 25 % à 50 %, de préférence dans la plage de 30 % à 40 %.

5. Vibrateur ultrasonore (10 ; 30) selon l'une quelconque des revendications précédentes,
dans lequel la surface de couplage (12 ; 32) est perpendiculaire à une direction longitudinale (L) du vibrateur ultrasonore (10 ; 30).

6. Vibrateur ultrasonore (10 ; 30) selon l'une quelconque des revendications précédentes,
dans lequel la cavité (14 ; 34) est de forme cylindrique circulaire.

7. Vibrateur ultrasonore (10 ; 30) selon l'une quelconque des revendications précédentes,
dans lequel la surface de découplage (13 ; 33), notamment la surface de travail (13) de la sonotrode (10), est orientée parallèlement à une direction longitudinale (L) du vibrateur ultrasonore (10 ; 30).

8. Système vibrant ultrasonore (50), contenant un vibrateur ultrasonore (10 ; 30) selon l'une des revendications précédentes ainsi qu'un transmetteur ultrasonore (30 ; 40) avec une surface de couplage (33 ; 43), par laquelle des vibrations ultrasonores peuvent être couplées du transmetteur ultrasonore (30 ; 40) dans la surface de couplage (12 ; 32) du vibrateur ultrasonore (10 ; 30).

9. Système vibrant ultrasonore (50) selon la revendication 8,
dans lequel le transmetteur ultrasonore (30 ; 40) est relié ou peut être relié au vibrateur ultrasonore (10 ; 30) de telle sorte qu'un contact n'existe qu'entre la surface de découplage (33 ; 43) du transmetteur ultrasonore (30 ; 40) et la surface de couplage (12 ; 32) du vibrateur ultrasonore (10 ; 30).

10. Système vibrant ultrasonore (50) selon l'une quelconque des revendications 8 et 9,
dans lequel le vibrateur ultrasonore (10) est une sonotrode (10) et le transmetteur ultrasonore (40) est un convertisseur ultrasonore (40).

11. Système vibrant ultrasonore (50) selon l'une quelconque des revendications 8 et 9,
dans lequel le vibrateur ultrasonore (10) est une sonotrode (10) et le transmetteur ultrasonore (30) est un booster ultrasonore (30).

12. Système vibrant ultrasonore (50) selon l'une quelconque des revendications 8 et 9,
dans lequel le vibrateur ultrasonore (30) est un booster ultrasonore (30) et le transmetteur ultrasonore (40) est un convertisseur ultrasonore (40).

13. Système vibrant ultrasonore (50) selon l'une quelconque des revendications 8 à 12,
dans lequel le vibrateur ultrasonore (10 ; 30) et le transmetteur ultrasonore (30 ; 40) sont reliés l'un à l'autre.

14. Procédé de fonctionnement d'un vibrateur ultrasonore (10 ; 30) selon l'une des revendications 1 à 7, en particulier dans un système vibrant ultrasonore (50) selon l'une des revendications 8 à **Fehler! Verweisquelle konnte nicht gefunden werden**., comprenant une étape dans laquelle des vibrations ultrasonores sont couplées dans la surface de couplage (12 ; 32) du vibrateur ultrasonore (10 ; 30), en particulier par un convertisseur ultrasonore (40) ou un booster ultrasonore (30).

15. Procédé selon la revendication 14,
dans lequel la surface de découplage (13 ; 33), notamment la surface de travail (13) de la sonotrode (10), est orientée parallèlement à une direction longitudinale (L) du vibrateur ultrasonore (10 ; 30).
